# EUROPEAN PATENT APPLICATION

(11) **EP 4 591 985 A1**
(43) Date of publication of application: **30.07.2025**
(21) Application number: 24153788.5
(22) Date of filing: 24.01.2024
(51) Int. Cl.: B02C 4/04, A23G 1/12, B02C 4/14, B02C 4/22, B02C 4/32, B02C 4/36, B02C 4/42, B02C 7/00, B02C 7/175

(54) **ROLLER GRINDING MACHINE, IN PARTICULAR A ROLLER MILL FOR GRINDING PASTE-LIKE MASSES, SUCH AS CHOCOLATE MASS**

(71) Applicant: Royal Duyvis Wiener B.V., 1541 KD Koog aan de Zaan (NL)
(72) Inventor: Gootjes, Geert Jan, 1541 KD Koog aan de Zaan (NL)
(74) Representative: De Vries & Metman

(57) **Abstract**

The invention relates to a roller grinding machine, in particular a roller mill (1) for grinding paste-like masses, such as chocolate mass, having a plurality of rollers (3) defining a grinding clearance between a pair or pairs of rollers (3), wherein at least two of the rollers (3) are each provided with a motor (15) to rotatingly drive or slow the respective roller (15). At least one of the motors is a permanent magnet motor (15).

## Description

The present invention relates to a roller grinding machine, in particular a roller mill for grinding paste-like masses, such as chocolate mass, having a plurality of rollers, e.g. two rollers or five rollers, arranged in parallel and/or in sequence (the latter in embodiments having three or more rollers), typically with a next roller arranged next to, behind (seen in flow direction) and/or above a previous roller, defining a grinding clearance between a pair or pairs of rollers, and wherein at least two of the rollers are each provided with a motor to rotatingly drive or slow the respective roller.

EP 1 721 673 relates to a roller grinding machine, in particular a five-roll mill for grinding doughy-pasty masses, such as chocolate masses, with several rollers arranged one behind and/or above the other, which rollers can be rotated by means of drive units for each of the rollers. The individual drive units can be controlled independently of one another and are designed in the form of a geared motor

US 4,603,815 relates to a refiner for mixtures and suspensions having a non-Newtonian rheological characteristic, such as chocolate, which comprises a plurality of power driven refining rollers, and a means of changing the pressure thereof on the respective supports, wherein a means is also provided which is effective to change the actual crowning of the rollers, or the effect of an equivalent crowning, as well as a means of changing the speed of said refining rollers. The crown change is achieved by having the individual rollers supported on an oscillating support adapted to oscillate its respective roller relatively to the associated roller by rotation about an orthogonal mid-axis with respect to the roller longitudinal axes, thereby a contact point is established at the roller middle area or circumference while their ends are offset. The speed of the refining rollers is changed through independent and individually operated controls, such as a DC motor.

It is an object of the present invention to provide a roller grinding machine that is more accurate and/or that facilitates servicing.

To this end, at least one of the motors is a permanent magnet motor. In an embodiment, at least two, preferably at least three, preferably at least four, preferably all, e.g. both or all five, of the rollers are each provided with a permanent magnet motor.

In another embodiment, at least one of the motors - in case of a sequence preferably at least the last motor in the sequence - has a higher rated power than at least one of the other motors.

In an embodiment, at least one of the motors, preferably most or all, is (are) permanent magnet synchronous motors and/or have a rated power of at least 2 kiloWatt (kW), preferably in a range from 10 to 100 kW, preferably in a range from 15 to 80 kW, and/or a torque of at least 500 Newtonmeter (Nm), preferably at least 700 Nm, and/or is (are) are liquid-cooled, in particular water-cooled, permanent magnet motors and/or has (have) the permanent magnets on the rotor.

In an embodiment, the motor(s) having a relatively low rated power has/have a power in a range from 2 to 25 kW and the motor(s) having a relatively high rated power has/have a power in a range from 20 to 80 kW.

In an embodiment, all motors or at least the motors that have a relatively low rated power have a diameter that is smaller than the diameter of the rollers, i.e. than the rollers driven by the respective motors.

In an embodiment, the motor(s) is (are) liquid-cooled, in particular water-cooled.

In an embodiment, during operation, at least one, preferably at least two of the rollers is/are driven by its motor, e.g. the last motor and/or the second motor in the sequence of rollers, and at least one of the other rollers is slown (braked) by its motor.

In a refinement, energy is recuperated from the motor or motors that is/are slown and the recuperated energy is preferably supplied to the driven motor(s).

In an embodiment, in at least one set of a motor and a roller, preferably at least two sets, preferably at least three, preferably at least four, preferably all sets, e.g. both or all five sets, the motor directly drives the roller, i.e. without a transmission, such as an angled transmission or a reduction, and/or the rotational axis of the rotor of the motor and the rotational axis of the roller are aligned, i.e. one is in line with the other, and/or most or each of the rollers is fixedly attached to and/or forms an extension of the rotor of the motor driving or slowing it.

The permanent magnet motors were found to enable (in comparison to geared motors) accurate and consistent simulation of gear ratio's between the rollers and thus close adherence to traditional recipes and production. Moreover, the roller grinding machine can be configured to accept existing rollers and roller sets.

In an embodiment, the rotor(s) of the motor(s) is (are) hollow, preferably having an internal diameter in a range from 70 to 110 mm, e.g. to accept rollers having ends with a diameter of 80 mm or 100 mm, and/or rotationally fix or are configured to rotationally fix an end of a roller inside, e.g. by means of clamping or by means of a key or spline. In an embodiment, the stator(s) of the motor(s) is (are) supported, e.g. fixed to the frame of the roller grinding machine, fixed relative to each other and/or provided with a torque support.

In an embodiment, at least two, preferably at least three, preferably all of the motors are located on the same side of the machine, thus further enhancing a relatively compact and straightforward design and facilitating maintenance and service.

In an embodiment, the machine comprises a controller arranged to control, e.g. by sinusoidal signal and/or frequency in a manner known in itself, the rotational speeds of at least two of the motors and thus of the directly driven rollers.

In an embodiment, the controller is arranged to control the rotational speed of the last roller in the sequence to within a range of 300 to 500 revolutions per minute (rpm), preferably to within a range of 360 to 420 rpm, and the rotational speed of the second-last roller in the sequence, which in a five roller mill would be the fourth roller, to within a range of 150 to 350 rpm, preferably 200 to 290 rpm. In an embodiment, having three or more rollers, the controller is arranged to control the rotational speed of the third-last roller in the sequence to within a range of 70 to 230 rpm, preferably 100 to 200 rpm, and, if present, the rotational speed of the fourth-last roller in the sequence, which in a five roller mill would be the second roller, to within a range of 15 to 90 rpm, preferably 25 to 70 rpm.

In an embodiment, the roller grinding machine comprises five sequential rollers and the grinding clearance between the first and second rollers is in range from 100 to 200 microns (pm), e.g. in a range from 100 to 130 µm for soft chocolate masses, i.e. masses with a high fat content, such as 28%, and in a range from 140 to 200 µm for dry chocolate masses, between the second and third rollers in range from 45 to 70 (pm), e.g. in a range from 45 to 55 µm for soft chocolate masses and in a range from 55 to 70 µm for dry chocolate masses, between the third and fourth rollers in range from 25 to 30 µm, and between the fourth and fifth rollers in range from 18 to 22 µm, e.g. at least substantially 20 µm.

In an embodiment, the rollers have a diameter in a range from 350 to 450 millimeters (mm), preferably in a range from 380 to 420 mm, e.g. 400 mm, and a length in a range from 40 to 250 centimeters (cm), preferably in a range from 150 to 200 cm.

In an embodiment, the rollers have a surface roughness in a range from 0,05 to 1 µm, 0,1 to 0,4 µm and/or a Rockwell hardness in a range from 45 to 60 HRc, preferably in a range from 51 to 54 HRc. In an embodiment, the wall of the rollers comprises two or more distinguishable layers, e.g. layers of different steel types and/or a relative hard outer layer, e.g. having a thickness in a range from 7 to 25 mm, supported by a relatively tough layer. In an embodiment, the rollers were manufactured by means of centrifugal casting. In an embodiment, at least the first roller in the sequence has a thicker wall than at least one of the other rollers. In an embodiment, the rollers have a crown in a range from 100 to 220 µm, preferably the higher crown in each subsequent roller.

For the sake of completeness, attention is drawn to the following patent publications.

EP 3 380 245 relates to a roller mill for grinding and processing cereals, granular materials, mixtures of cereals and similar products, having at least one pair of parallel cylinders positioned side by side, wherein each cylinder of each pair of cylinders is provided with its own permanent magnet torque motor mounted directly on its own shaft, and wherein at least one control circuit is suited to supervise the rotation parameters of said cylinders of each pair.

DE 10 2005 037 387 relates to a roll train with at least two (preferably five) rolls and a device for determining the thickness of processed material layer on the roll, at least one thickness measuring device is provided on the roll(s) such that the thickness of the layer is determined over the whole width of the roll(s).

WO 2009/043590 relates to a roller mill for grinding alimentary grains, which roller mill has at least one pair of counter-rotating grinding rollers each controlled by an independent motor.

The invention will now be explained in more detail with reference to the drawings.
Figure 1 is a side view of a roller mill according to the present invention.
Figure 2 is a cross-section of the last two rollers of a roller mill according to the present invention.

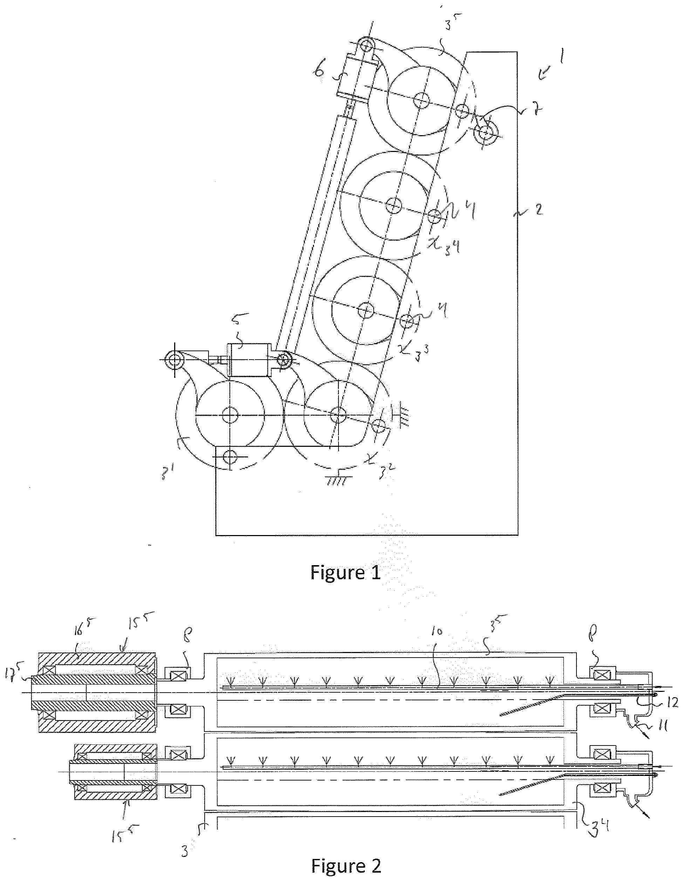

Figure 1 shows a roller mill 1 comprising a frame 2, and a plurality, in this example five rollers 3¹ to 3⁵, mounted in the frame by means of pivots 4. The first and second rollers 3¹, 3² are interconnected via an hydraulic cylinder 5 to be able to set the pressure between these rollers. Similarly, the second and fifth rollers 3², 3⁵ are interconnected via an hydraulic cylinder 6 to be able to set the pressure between these rollers 3², 3⁵ and the rollers 33, 3⁴ in between. A scraper 7 is mounted in the frame, to scrape comminuted product from the fifth and last roller 3⁵.

As illustrated in Figure 2, each of the rollers is suspended in bearings 8. In this example, the rollers have a diameter of 400 mm, a length of 1.800 mm, a wall thickness of 35 mm, a surface roughness of 0,2 µm, and a convex crown of 150 µm. The rollers were manufactured by centrifugal casting at least two different steel types, a relatively hard steel forming the outer surface of the rollers and a layer of a relatively tough steel type supporting the harder surface layer. Further, the rollers are hollow and internally provided with a lance 10 to spray a coolant, such as water, onto the inner wall of the roller. The rollers further have an outlet 11 for the coolant and a temperature sensor 12 to enable controlling the temperature of the roller via the amount of coolant fed to the roller.

Each of the rollers 3 is provided with a permanent magnet synchronous motor 15 comprising a stator 16 fixed to the frame and a rotor 17 fixed to the roller 3, to provide direct drive of the roller by the motor. The motors 15⁵, 15² fixed to the fifth (last) and second rollers 3⁵, 3² have an outer diameter of 400 mm and rated power of at least 40 kW, such as Baumüller DST2-200ML54W-045-5, whereas the motors 15⁴, 153, and 15¹, have an smaller outer diameter and a lower rated power, e.g. of 20 kW.

In an example, for soft chocolate mass, the grinding clearance between the first and second rollers is adjusted to 125 microns (pm), between the second and third rollers to 50 µm, between the third and fourth rollers to 28 µm, and between the fourth and fifth rollers to 20 µm.

During operation, the mass is fed between the first and second rollers and, after passing through the grinding clearance, sticks to second roller. Thus, it is transported to the grinding clearance between the second and third roller and, after passing through that grinding clearance, sticks to the third roller, and so on. After passing through the fourth and last grinding clearance, the product, in which the particulate has now been comminuted to 20 µm is removed from the fifth roll by means of the scraper.

The permanent magnet motors were found to enable enhanced (in comparison to geared motors) accuracy and/or consistency in controlling e.g. the rotational speed of the rollers and thus provide more efficient and accurate grinding and adjustment to specific recipes, such as white chocolate and dark chocolate.

The invention is not limited to the embodiment as described above, which can be varied in several ways within the scope of the claims. E.g., the roller mill according to the present invention is also suitable for refining other pastes, such as compound (cocoa solids and vegetable fat), pigments, paints, and other pastes containing particulate matters.

## Claims

1. Roller grinding machine, in particular a roller mill (1) for grinding paste-like masses, such as chocolate mass, having a plurality of rollers (3) defining a grinding clearance between a pair or pairs of rollers (3), wherein at least two of the rollers (3) are each provided with a motor (15) to rotatingly drive or slow the respective roller (3), **characterized in that** at least one of the motors is a permanent magnet motor (15).

2. Roller grinding machine (1) according to claim 1, wherein at least two, preferably at least three, preferably at least four of the rollers (3) are each provided with a permanent magnet motor (15).

3. Roller grinding machine (1) according to claim 1 or 2, wherein at least one of the motors (15⁵) has a higher rated power than at least one of the other motors (15⁴).

4. Roller grinding machine (1) according to any one of the preceding claims, wherein the motors are synchronous motors (4) and/or have a rated power of at least 10 kiloWatt (kW) and/or a torque of at least 500 Newtonmeter (Nm), preferably at least 700 Nm.

5. Roller grinding machine (1) according to any of the preceding claims, wherein all motors (15) or at least the motors (15⁴) that have a relatively low rated power have a diameter that is smaller than the diameter of the rollers (3) .

6. Roller grinding machine (1) according to any of the preceding claims, wherein, during operation, at least one, preferably at least two of the rollers (3⁵) is/are driven by its motor (15⁵) and at least one of the other rollers (3⁴) is slown by its motor (15⁴).

7. Roller grinding machine (1) according to claim 6, wherein energy is recuperated from the motor or motors (15) that is/are slown and wherein the recuperated energy is preferably supplied to the driven motor(s) (15).

8. Roller grinding machine (1) according to any of the preceding claims, wherein, in at least one set of a motor (15¹ .. 15⁵) and a roller (3¹ .. 3⁵), the motor directly drives the roller and/or the rotational axis of the rotor of the motor and the rotational axis of the roller are aligned.

9. Roller grinding machine (1) according to any of the preceding claims, wherein at least two, preferably at least three, preferably all of the motors (15) are located on the same side of the machine (1).

10. Roller grinding machine (1) according to any of the preceding claims comprising a controller arranged to control the rotational speeds of at least two of the motors (15) .

11. Roller grinding machine (1) according to claim 10, wherein the controller is arranged to control the rotational speed of the last roller in the sequence to within a range of 300 to 500 revolutions per minute (rpm), preferably within 360 to 420 rpm, and the rotational speed of the second to last roller in the sequence to within a range of 150 to 350 rpm, preferably within 200 to 290 rpm.

12. Roller grinding machine (1) according to any one of the preceding claims, comprising five sequential rollers (3¹ .. 3⁵) and wherein the grinding clearance between the first and second rollers (3¹, 3²) is in range from 100 to 200 microns (pm), between the second and third rollers (3², 3³) in a range from 45 to 70 (pm), between the third and fourth rollers (3³, 3⁴) in a range from 25 to 30 µm, and between the fourth and fifth rollers (3⁴, 3⁵) in a range from 18 to 22 µm.

13. Roller grinding machine (1) according to any one of the preceding claims, wherein the rollers (3) have a diameter in a range from 350 to 450 millimeters (mm), preferably in a range from 380 to 420 mm, e.g. 400 mm, and a length in a range from 40 to 250 centimeters (cm), preferably in a range from 150 to 200 cm.

14. Roller grinding machine (1) according to any one of the preceding claims, wherein the rollers (3) have a surface roughness in a range from 0,1 to 1 µm and/or a Rockwell hardness in a range from 45 to 60 HRc.

15. Roller grinding machine (1) according to any one of the preceding claims, wherein the rotor(s) of the motor(s) is (are) hollow, preferably having an internal diameter in a range from 70 to 110 mm and/or rotationally fix or are configured to rotationally fix an end of a roller inside, e.g. by means of clamping or by means of a key or spline.
